# EUROPEAN PATENT APPLICATION

(11) **EP 3 319 361 A1**
(43) Date of publication of application: **09.05.2018**
(21) Application number: 16306439.7
(22) Date of filing: 03.11.2016
(51) Int. Cl.: H04W 24/02, H04W 48/20, H04W 16/28, H04W 16/18, H04W 48/16

(54) **METHOD AND APPARATUS FOR A RADIO COMMUNICATION NETWORK**

(71) Applicant: Alcatel Lucent, 91620 Nozay (FR)
(72) Inventor: Liao, Qi, 70435 Stuttgart (DE); Malanchini, Ilaria, 70435 Stuttgart (DE); Suryaprakash, Vinay, 70435 Stuttgart (DE); Baracca, Paolo, 70435 Stuttgart (DE)
(74) Representative: 2SPL Patentanwälte PartG mbB

(57) **Abstract**

A method for a radio communication network is provided. The method includes displaying, to a user, a real-world environment view which is augmented with information about at least one access point of the radio communication network located in the real-world. Further, the method includes receiving a user input which indicates a desired interaction between the user and the access point. The method also includes transmitting information about the desired interaction to a management node of the radio communication network.

## Description

### Field

Examples relate to managing a radio communication network. In particular, examples relate to a method and an apparatus for a radio communication network.

### Background

Due to the nature of radio communications, i.e., the invisibility of communication channels and coverage areas to the naked eye, wireless service providers have been trying to optimize their networks using limited information extracted from a) background measurements, and b) feedback provided by devices (e.g. smartphones and tablet computers) used by end users.

However, an end user who cannot actively participate in the service delivery process for a requested service (except for, e.g., soliciting access to Wi-Fi access points), has hardly a chance to customize either allocated resources or associated access points. Compared to service providers in conventional markets such as retail sales, where vendors can interact with their customers through visible marketing and other distribution channels, wireless service providers are faced with a rather large hurdle in their path towards actualizing a real user-centric network due to the inherent lack of 'active' participation by the users in the connection establishment process.

Hence, there may be a desire for improved network management.

### Summary

According to a first aspect of the present disclosure, it is provided a method for a radio communication network. The method comprises displaying, to a user, a real-world environment view which is augmented with information about at least one access point of the radio communication network located in the real-world. Further, the method comprises receiving a user input which indicates a desired interaction between the user and the access point. The method also comprises transmitting information about the desired interaction to a management node of the radio communication network.

In some examples, the information about the access point of the radio communication network comprises information about a status of the access point.

According to some examples, the information about the access point of the radio communication network comprises information about a beam pattern of the access point.

In some examples, the user input indicates a desired modification of the beam pattern.

According to some examples, the information about the access point of the radio communication network comprises information about a quality of service of the access point at the user's position or in the vicinity thereof.

In some examples, the real-world environment view is augmented with information about a plurality of access points, wherein the user input indicates a selection of one of the plurality of access points as a desired access point for connection.

According to some examples, the access point is a movable access point, wherein the user input indicates a desired movement of the access point.

In some examples, the real-world environment view is further augmented with information about an effect of the desired interaction on the access point.

According to some examples, the user input is a haptic input on a touchscreen.

In some examples, the method further comprises modifying an operation of the access point based on the information about the desired interaction.

According to some examples, the method further comprises displaying, to the user, a message which contains information about an action undertaken in the radio communication network based on the information about the desired interaction.

In some examples, the method further comprises transmitting, to a mobile terminal of the user, a message which comprises an invitation to launch an application for performing one of the above methods in exchange for information about an access point of the radio communication network with an improved quality of service compared to an access point currently used by the mobile terminal.

According to a second aspect of the present disclosure, it is provided a computer program having a program code for performing the above method, when the computer program is executed on a computer or processor.

According to a third aspect of the present disclosure, it is provided an apparatus for a radio communication network. The apparatus comprises a display configured to display, to a user, a real-world environment view which is augmented with information about at least one access point of the radio communication network located in the real-world. Further, the apparatus comprises an input device configured to receive a user input which indicates a desired interaction between the user and the access point. The apparatus also comprises a transmitter configured to transmit information about the desired interaction to a management node of the radio communication network.

In some examples, the display and the input device form a touchscreen.

### Brief description of the Figures

Some examples of apparatuses and/or methods will be described in the following by way of example only, and with reference to the accompanying figures, in which
Fig. 1 illustrates a flowchart of an example of a method for a radio communication network;
Fig. 2 illustrates an example of an apparatus for a radio communication network;
Fig. 3 illustrates an example of a mobile terminal displaying a real-world environment view which is augmented with information about access points of a radio communication network;
Fig. 4 illustrates an example of a mobile terminal receiving a user input which indicates a desired interaction between the user and an access point of a radio communication network;
Fig. 5 illustrates an example of a mobile terminal displaying a real-world environment view which is augmented with information about a movable access point of a radio communication network;
Fig. 6 illustrates an example of a mobile terminal displaying a real-world environment view which is augmented with information about an effect of a desired interaction on a mobile access point; and
Fig. 7 illustrates an example of a radio communication network receiving feedback from a user.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e., only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a", "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises", "comprising", "includes" and/or "including", when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

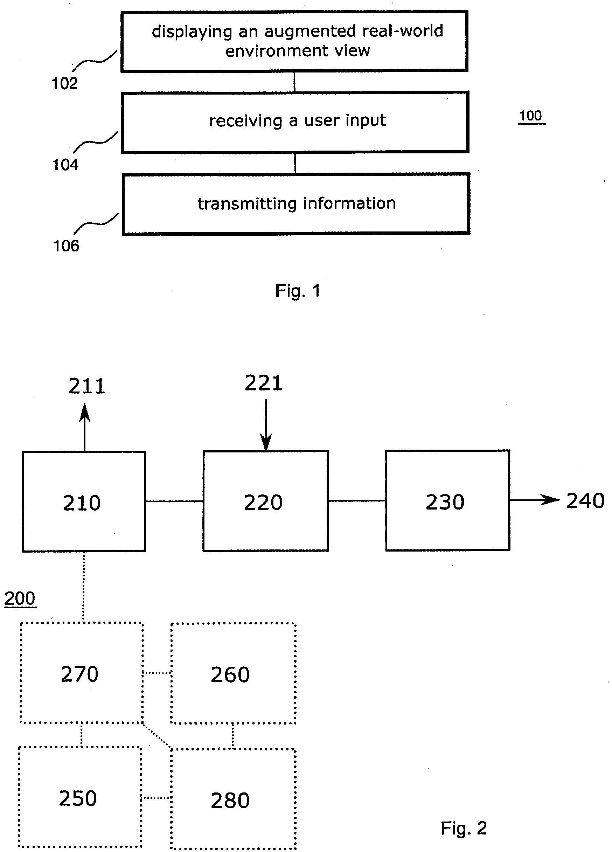

**Fig. 1** illustrates a method 100 for a radio communication network. The method 100 comprises displaying 102, to a user, a real-world environment view which is augmented with information about at least one access point of the radio communication network located in the real-world. Further, the method 100 comprises receiving 104 a user input which indicates a desired interaction between the user and the access point. The method 100 also comprises transmitting 106 information about the desired interaction to a management node of the radio communication network.

The method 100 may allow an interactive communication between the user and the radio communication network or an operator of the radio communication network. Via the management node, the operator may gather feedback related to the radio communication network (i.e. the information about the desired interaction) from the user. The method 100 may allow (help) the user to express his/her requirements. The feedback may allow (help) the operator to improve and customize the services according to the user's specifications (demands) conveyed through the feedback.

The radio communication network may, for example, correspond to one of the mobile communication systems standardized by the 3rd Generation Partnership Project (3GPP), e.g., Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), 5th generation wireless systems (5G) or correspond to mobile communication networks with different standards, e.g., Worldwide Interoperability for Microwave Access (WIMAX) IEEE 802.16 or WLAN IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc.

The access point of the radio communication network may be any networking hardware device that allows a device, which is compliant to the radio communication network, to connect to the radio communication network. For example, the access point of the radio communication network may be a base station serving a radio cell, or a WLAN router.

The augmented real-world environment view illustrates a view of a real-world environment and further the information about at least one access point of the radio communication network which is located in the real-world. That is, the view of the real-world environment is complemented by the information about at least one access point of the radio communication network. An access point of the radio communication network may, e.g., be located in the displayed view of the real-world environment. Alternatively, an access point of the radio communication network may, e.g., be located in the neighborhood (vicinity) of the displayed view of the real-world environment.

The information about an access point of the radio communication network may, e.g., comprise a highlighting or an abstracted representation of the access point of the radio communication network. Moreover, the information about an access point of the radio communication network may, e.g., comprise information about the access point's (current or future) status and information about (current or future) beams provided by the access point. The information about an access point of the radio communication network may, e.g., be displayed as text, graphic symbols, or combinations thereof.

The augmented real-world environment view may allow a user to recognize an access point of the radio communication network, and to gather information about the recognized access point of the radio communication network.

The user input indicates a desired interaction between the user and the access point. That is, the user input indicates a desired action of the user on the access point. The user input may, e.g., be an audio input (e.g. a voice command), a haptic input (e.g. a gesture, a touch input, a keyboard input, a mouse input etc.), or a combination thereof. The user input may allow the user to express his/her requirements.

The information about the desired interaction may, e.g., comprise an identity of the access point of the radio communication network, an identity of an apparatus on which the method is executed, an identity of the user, information about the user's position, or information about the desired action of the user on the access point. The information about the desired interaction is an active user feedback for the operator, which may allow the operator to improve and customize the services according to the user's specifications (demands). For example, the information about the desired interaction may be transmitted via the radio communication network to a management node, e.g. a back-end of the operator, which manages (at least partly) the radio communication network. The back-end may include one or more servers, and may include application software, e.g., to enable (wireless) communication with the radio communication network. Additionally, the back-end may include an interface to allow an operator to provide instructions, e.g. to include rules, to set thresholds and/or conditions for such rules, to respond to requests, to define procedures, etc. Alternatively, the information about the desired interaction may be transmitted through any other communication network to the management node of the radio communication network. In some examples, the management node may further be an access point of the radio communication network (e.g. a base station).

In some examples, the information about the access point of the radio communication network may comprise information about a status of the access point. The information about the status of the access point may comprise information allowing to identify the access point, information describing a condition of the access point, or information describing a performance of the access point. For example, the information about the status of the access point may comprise information about an identity of the access point, information about an availability of the access point (i.e. information if a device of the user may connect to this access point), information about a load of the access point, information about a Radio Access Technology (RAT) provided by the access point, information about a performance of the access point, information whether or not it is advisable for the user to connect to this access point. The information about the status of the access point may be information about a current status of the access point, a future status of the access point, or a combination thereof.

Further, the information about the access point of the radio communication network may in some example comprise information about a beam pattern of the access point. The information about the beam pattern of the access point may describe available beams of the access point as well their characteristics. For example, the information about the beam pattern of the access point may comprise a two- or three-dimensional illustration of one or more beam shapes generated (provided) by the access point. The information about the beam pattern of the access point may, e.g., further comprise information about a transmission direction of one or more beams generated by the access point.

Accordingly, the user input may in some examples indicate a desired modification of the beam pattern. For example, the user input may indicate a desired modification of a transmission direction of a beam generated by the access point. Alternatively, or additionally, the user input may indicate a desired modification of the beam shape. For example, the user input may indicate a desired widening or narrowing of the beam. That is, the user input may allow a virtual reconfiguration of the beam pattern.

The information about the access point of the radio communication network may in some examples also comprise information about a Quality of Service (QoS) of the access point at the user's position or in the vicinity thereof. For determining the QoS of the access point at the user's position or in the vicinity thereof, a position of the user may be determined and one or more quality indicators may be calculated based on the determined position. A quality indicator may, e.g., be an estimated signal strength, a maximum capacity, a link reliability, or a Signal-to-Interference-plus-Noise-Ratio (SINR). The information about the QoS of the access point at the user's position or in the vicinity thereof may, e.g., comprise one or more of the above mentioned quality indicators, or a combination thereof. For example, the QoS of the access point at the user's position or in the vicinity thereof may be presented to the user using color coding or a graphical representation (e.g. similar to signal reception bars used in mobile devices for displaying the signal strength). The user may, hence, be provided with information about the QoS he/she may experience when connecting to the access point.

In some examples, the real-world environment view may be augmented with information about a plurality of access points. That is, the augmented real-world environment view may illustrate a view of a real-world environment and further information about a plurality of access points of the radio communication network which are located in the real-world. The user input may then, e.g., indicate a selection of one of the plurality of access points as a desired access point for connection. That is, a user may be allowed to indicate an access point he/she wants to connect to. This may facilitate cell detection. For example, the selection of a desired base station may further trigger some feedback to a current anchor base station of the user, which may facilitate beam selection at the desired base station.

The access point may in some examples also be a movable access point. That is, the access point may change (alter) its position in the real world. The user input may then indicate a desired movement of the access point. For example, the user input may indicate a desired movement of the access point towards the user's position or any other desired position. Accordingly, the user may communicate his/her preference regarding the positioning of the access point to the managing node of the operator. This may allow the operator, or the managing node, e.g. based on previous input received from the operator, to change (alter) the positioning of the access point according to the user's preferences (needs).

The real-world environment view may in some examples further be augmented with information about an effect of the desired interaction on the access point. That is, the augmented real-world environment view may illustrate a view of a real-world environment and further information about an effect of the desired interaction on the access point. For example, the information about the effect of the desired interaction on the access point may comprise information about how a status of the access point, an availability of the access point, a load of the access point, a performance of the access point, or a beam pattern of the access point changes because of the desired interaction. Alternatively, the information about the effect of the desired interaction on the access point may, e.g., comprise information about an updated status of the access point, an updated availability of the access point, an updated load of the access point, an updated performance of the access point, or an updated beam pattern of the access point due to the desired interaction with the access point. This may allow a user to recognize the effects of his/her desired interaction with the access point. For example, a user may recognize how much he/she may benefit from a virtual reconfiguration of the access point. For example, this may allow a user to find a virtual configuration for the access point which is fully suited to his/her requirements. This best virtual configuration for the access point may be transmitted to the operator as information about the desired interaction.

In some examples, the user input may be a haptic input on a touchscreen. Haptic input on a touchscreen may facilitate the handling by the user. The user may directly touch or point to a location on the touchscreen and, e.g., select or drag the access point displayed on the touchscreen. In this way, the user may provide his/her feedback to the operator of the radio communication network in a convenient way.

The method 100 may in some examples further comprise modifying an operation of the access point based on the information about the desired interaction. That is, the operator, or the management node, e.g. based on a policy preset by the operator, may consider the user's feedback for the operation of the access point. For example, the management node or a further network node may modify (change) the operation of the access point, e.g. change its beam pattern, change beam intensity, change its position, etc. Accordingly, the user's pref erences may be taken into account so that the radio communication network may be considered as a user-centric network providing improved service to the user.

Additionally, the method 100 may further comprise displaying, to the user, a message which contains information about an action undertaken in the radio communication network (e.g. by the operator of the radio communication network, the management node or any other network node) based on the information about the desired interaction. That is, the user may be informed about the consideration of his/her feedback by the operator. The user may, hence, experience user-centric network operation.

In some examples, the method 100 may further comprise transmitting, to a mobile terminal of the user, a message which comprises an invitation to launch an application for performing one or more of the above method steps. The message may further offer information about an access point of the radio communication network with an improved quality of service compared to an access point currently used by the mobile terminal in exchange for launching the application. The method may allow the network to trigger a user feedback. That is, some signaling may also be sent from the network to the users. For example, if a user is connected only to a single macro base station, the macro base station may send some signaling to the user in order to trigger the user to check for new access points (when he/she is closer to them or when certain applications may be more reliably executed via such other access point). Such new access point is not necessarily another macro base station, but may also be a different type of access point, e.g. a pico base station or a femto base station. Moreover, if the user has access to beams capable of providing better service satisfaction guarantees, the network may send some signaling to the user in order to trigger the user to check for these beams.

The method 100 may, hence, allow an interactive communication between users and wireless service providers. The communication may be facilitated by haptic augmented reality in order to help users express their requirements, and to help the service providers improve and customize the services according to the users' specifications (or demands) conveyed through the feedback.

In a first step, mobile augmented reality assisted visualization of not only the access points, but also of some information about the access point's status (e.g. the current load) as well as beam patterns (e.g. transmission direction and shape) and position-aware performance indicators (e.g. estimated signal strength, maximum capacity, link reliability) on the display of a mobile device may be comprised.

In a second step, haptic feedback (or touch) to (i) allow the user to select one or more access points to which they would like to connect, (ii) help the user virtually control the beam of a desired access point in order to facilitate gaining access to it and (iii) permit the user to shape (or align) the beam of a static access point or to relocate a moving access point by gesturing with his/her fingers may be comprised.

In a third step, control information including (but not being limited to) the desired direction and shape of the beam, or the preferred access points to associate with may be reported to a management node of the operator within the network as feedback in order to help the network operator to optimize its operation as well as configuration in relation to aspects such as user association and beamforming design.

The proposed solution may allow the users to customize their connectivity conditions using haptic augmented reality based feedback and, hence, (indirectly) tailor the values of the type of information and feedback that is provided to the wireless network providers based on their specific requirements.

By allowing users to actively (and spontaneously) interact with the management node of the operator, e.g. a wireless network service provider, a truly user-centric network may be provided.

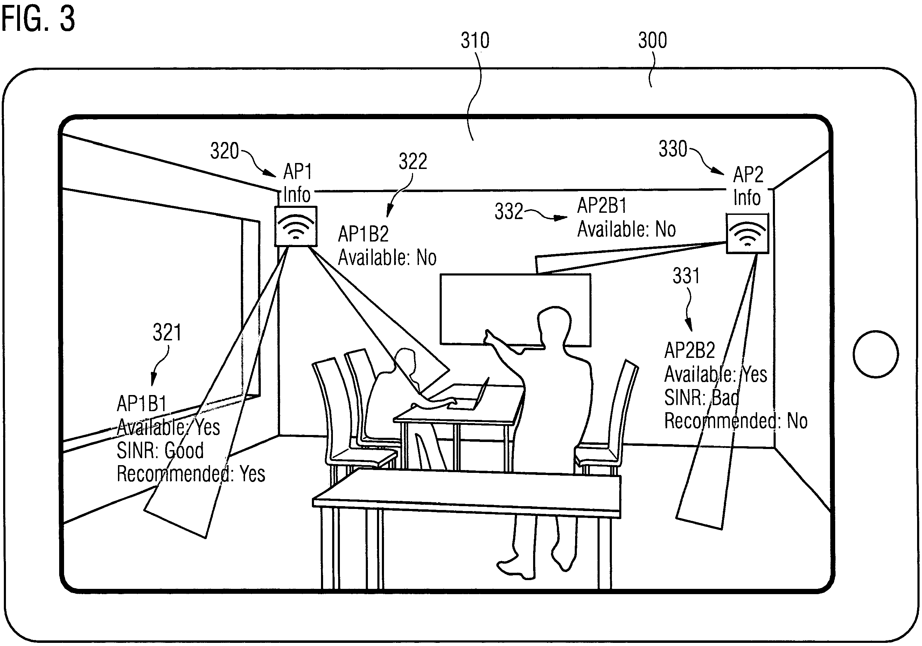

More details and aspects of the method 100 are mentioned in connection with the proposed concept or one or more examples described below (e.g. Figs. 3 to 6). The method 100 may comprise one or more additional optional features corresponding to one or more aspects of the proposed concept or one or more examples described below.

In the following, an apparatus 200 for a radio communication network is illustrated in Fig. 2. The apparatus 200 comprises a display 210 configured to display, to a user 211, a real-world environment view which is augmented with information about at least one access point of the radio communication network located in the real-world. Further, the apparatus 200 comprises an input device 220 configured to receive a user input 221 which indicates a desired interaction between the user 211 and the access point. The apparatus 200 also comprises a transmitter 230 configured to transmit information about the desired interaction to a management node 240 of the radio communication network.

The apparatus 200 may allow an interactive communication between the user 211 and the radio communication network or an operator of the radio communication network. Via the management node 240, the operator may gather feedback (i.e. the information about the desired interaction) from the user 211. The apparatus 200 may allow the user 211 to express his/her requirements and/or request his/her wishes. The feedback may allow the operator to improve and customize the user's network interaction according to the user's demands, e.g., by enabling the management node to instruct suitable network elements, such as the access points involved, accordingly.

The augmented real-world environment view, which is displayed to the user 211 by the display 210, illustrates a view of a real-world environment and further the information about at least one access point of the radio communication network which is located in the real-world. That is, the view of the real-world environment is complemented by the information about at least one access point of the radio communication network. The view of the real-world environment may, e.g., be an image or a video generated by a camera 250 of the apparatus 200. An access point of the radio communication network may, e.g., be located in the displayed view of the real-world environment. Alternatively, an access point of the radio communication network may, e.g., be located in the neighborhood (vicinity) of the displayed view of the real-world environment. The information about the at least one access point of the radio communication network may, e.g., be received from a node of the radio communication network (e.g. from the management node 240) by a receiver 260 of apparatus 200. A processor 270 may then generate the augmented real-world environment view by, e.g., superimposing the view of the real-world environment and the information about the at least one access point of the radio communication network. Moreover, the apparatus 200 may include a memory device 280 for storing data related to the view of the real-world environment, the information about the at least one access point, or the augmented real-world environment view. Further, the memory device 280 may store instructions for controlling one or more components of the apparatus 200 (e.g. using processor 270).

The input device 220 may, e.g., be configured to receive an audio input (e.g. a voice command), a haptic input (e.g. a gesture, a touch input, a keyboard input, a mouse input etc.), or a combination thereof. The user input 221 may allow the user 211 to express his/her requirements.

The management node 240 may in some examples be a back-end of the operator which manages the radio communication network. The transmitter may then, e.g., be configured to transmit the information about the desired interaction via the radio communication network to the back-end of the operator. Alternatively, the transmitter may be configured to transmit the information about the desired interaction through any other communication network to a management node of the radio communication network.

In some examples, the management node 240 may also be comprised by an access point of the radio communication network (e.g. a base station). The access point may, e.g., comprise a transceiver for providing the radio interface of the radio communication network. Further the access point may comprise one or more processors for controlling the access point and it's components as well as one or more memory devices storing operation data related to the operation of the access point and/or instructions for controlling the access point. Moreover, the access point may comprise a backhaul interface for connection to a core network of the radio communication network. Hence, common operation of the access point may be provided. As indicated above, the access point may optionally also include the management node 240, or a node which is configured to perform part of the functionalities of the management node 240. For example, the management node 240 may be implemented by dedicated instructions which are stored in the memory device of the access point and executed by the one or more processors of the access point.

In some examples, the display 210 and the input device 220 may be implemented as a touchscreen. This may allow the user 211 to give a haptic input on the touchscreen. Haptic input on the touchscreen may facilitate the handling by the user 211. The user 211 may directly touch or point to a location on the touchscreen and, e.g., select or drag the access point displayed on the touchscreen. It may, hence, provide a convenient way for the user 211 to provide his/her feedback to the management node of the operator of the radio communication network.

The apparatus 200 may in some examples, e.g., be a mobile terminal. For example, the apparatus 200 may be a smartphone, a tablet computer, or a laptop computer. Mobile terminals are common nowadays. It may, hence, be convenient for the user 211 to provide his/her feedback to the operator using his/her mobile terminal.

More details and aspects of the apparatus 200 are mentioned in connection with the proposed concept or one or more examples described above or below (e.g. Fig. 1). The apparatus 200 may comprise one or more additional optional features corresponding to one or more aspects of the proposed concept or one or more examples described above or below.

In the following, some examples of mobile terminals according to the proposed concept are illustrated in Figs. 3 to 6. In the following discussion, it is assumed that the user's location (position) is known. For example, this information may be acquired by the network (e.g. using any of the multitude of available location determining services) once the service according to the proposed concept is activated on the user device.

Fig. 3 illustrates a mobile terminal 300 displaying a real-world environment view 310 which is augmented with information 321, 322, 331, 332 about two access points 320, 330 of a radio communication network. The mobile terminal 300 may, e.g., be a smartphone or a tablet computer as illustrated in Fig. 3.

The real-world environment view 310 illustrates an office scene with people who interact in an office. A first access point 320 of a radio communication network and a second access point 330 of the radio communication network are located in the office. The access points 320, 330 are highlighted in the real-world environment view 310 as abstracted representations.

The real-world environment view 310 further comprises information 321, 322 about beams generated (provided) by the first access point 320. As indicated in Fig. 3, the information 321, 322 may comprise information about the identities of the beams, two-dimensional illustrations of the beam shapes, information about the availability of the beams, information of a QoS offered by a beam, or information whether or not it is advisable for the user to connect to use this beam. As indicated in Fig. 3, only one of the two beams provided by the first access point 320 is available for the user holding the mobile terminal 300.

Similarly, the real-world environment view 310 further comprises information 331, 332 about beams generated (provided) by the second access point 330. Also for the second access point 330, only one of the two provided beams is available for the user holding the mobile terminal 300.

The augmented real-world environment view 310 may allow a user to gather enough information for selecting either the available beam of the first access point 320, or the available beam of the second access point 330 for connection. In the example of Fig. 3, the information 321 indicates that it is advisable to connect to the available beam of the first access point 320, whereas the information 331 indicates that it is not advisable to connect to the available beam of the second access point 330.

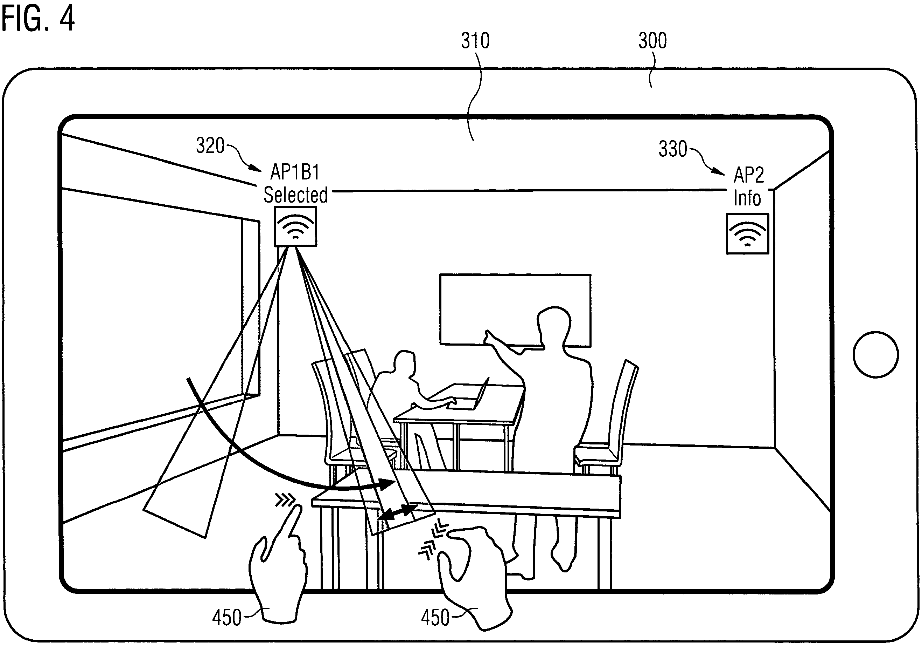

As indicated in Fig. 4, the user may give a user input 450 to the mobile terminal 300 for selecting the first access point 320 based on the given information in the augmented real-world environment view 310. The user input 450 indicates a desired interaction between the user and the first access point 320. That is, the user does not immediately cause a connection of the mobile terminal 300 to the first access point. The user input 450 indicates the user's preference to connect to the first access point. However, this feedback may allow an operator of the first access point 320 to reconfigure the radio communication network in order to allow the user to connect to the first access point 320.

As indicated in Fig. 4, the user may give further user input 450 in order to indicate a desired modification of the available beam of the first access point 320. For example, the user input 450 may indicate a desired modification of a transmission direction, or a beam width of the available beam of the first access point 320. Therefore, the user may, e.g., touch the touchscreen of the mobile terminal 300 for selecting, moving or widening/narrowing the beam of the first access point 320.

In other words, Figs. 3 and 4 may illustrate a radio pattern and performance visualization using augmented reality. A mobile user interface may be provided, where users can better visualize the services offered by a wireless network with the help of augmented reality to represent network features of salience like the infrastructure, transmission channels, and QoS of a particular access point, or QoS of a specific beam of the access point. As indicated in Figs. 3 and 4, the mobile device may display an augmented reality view of the real world combined with the status of the wireless access points, their beam patterns, and position-dependent performance indicators such as the SINR. The display may show the characteristics of each access point and the three-dimensional beam shapes generated by the access points. Moreover, it may also display the position-specific performance indicators (e.g. signal strength, maximum throughput, link reliability) when a specific position in the 3D view is requested by a user's gesture or touch.

Further, a haptic feedback for interactive user-centric networks may be provided. Facilitated by the haptic feedback, a user may, e.g., virtually control the transmission direction and beam shapes of the access points on the display with fingers or gestures. For example: a user, after visualizing the access points available, may "indicate" to a specific "available" access point (to which he is not yet connected) in order to facilitate cell detection. This action may, for instance, trigger some feedback from the user to his/her anchor base station with the user's GPS position, which may facilitate beam selection at the requested access point in order to better serve this user. The "availability" of a given access point may also be one of the characteristics displayed by means of color-coding, etc. in order to avoid the creation of hotspots by many users trying to request connectivity with the same access point. The virtual control requested by the users does not necessarily result in a network reconfiguration in the real world. However, the network may use the feedback and take the users' preference into account to improve the user-centric service delivery.

For example, a user may capture a beam and pull it towards him/her, and expand or contract the width of the beam on the display as shown in Fig. 4. The updated performance indicators resulting from a virtual reconfiguration caused by a user request (e.g. by touching or pointing to a location on the screen) may be displayed in, e.g., a sidebar to show the user how much he/she can benefit from the new reconfiguration. Users may find the best virtual configuration suited to their own interest and have the final virtual configuration be reported to the network. In response, the network may (partially) accommodate the requested reconfiguration, e.g., by instructing a particular access point to apply an appropriate beamforming technique. Another degree of freedom, namely, heterogeneous degrees of access point configurability, may be added to give the access points and their beams different levels of configuration flexibility. For example, the access points or beams which are unavailable for dynamic reconfiguration (e.g. those which provide basic guaranteed service coverage) may be displayed by the use of specific colors, and these access points or beams, though displayed, are not be released for users to be able to control them virtually.

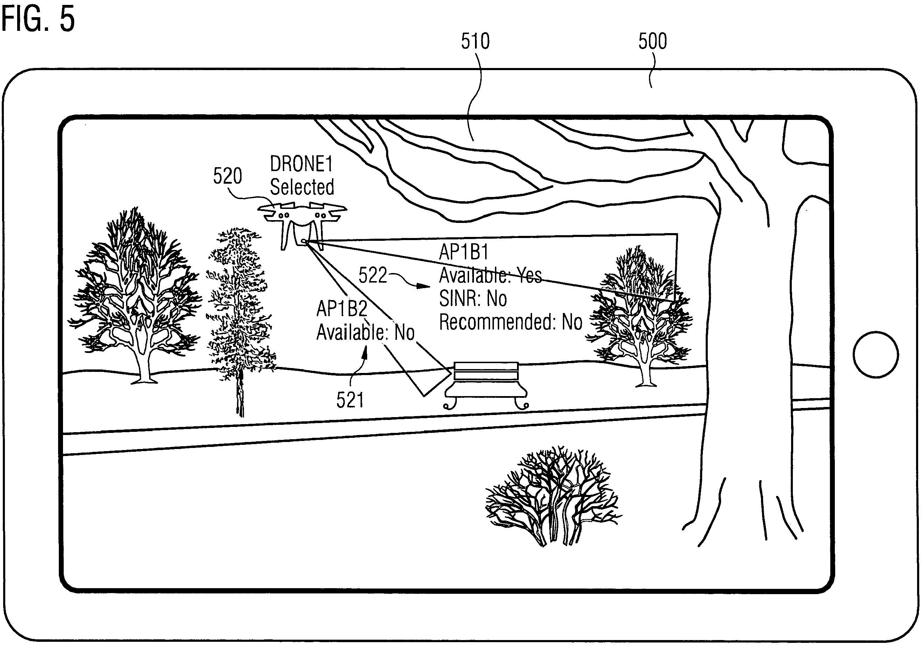

Another mobile terminal 500 displaying a real-world environment view 510 which is augmented with information 521, 522 about a movable access point 520 of a radio communication network is illustrated in Fig. 5. The real-world environment view 510 illustrates an outdoor scene in a park. A movable access point 520 (e.g. implemented as a drone which is configured to perform the functions of a base station) is located in the park. The mobile access point 520 is highlighted in the real-world environment view 510.

The real-world environment view 510 further comprises information 521, 522 about beams generated (provided) by the mobile access point 520. Again, the information 521, 522 may comprise information about the identities of the beams, two-dimensional illustrations of the beam shapes, information about the availability of the beams, information of a QoS offered by a beam, or information whether or not it is advisable for the user to connect to use this beam. As indicated in Fig. 5, only one of the two beams provided by the mobile access point 520 is available for the user.

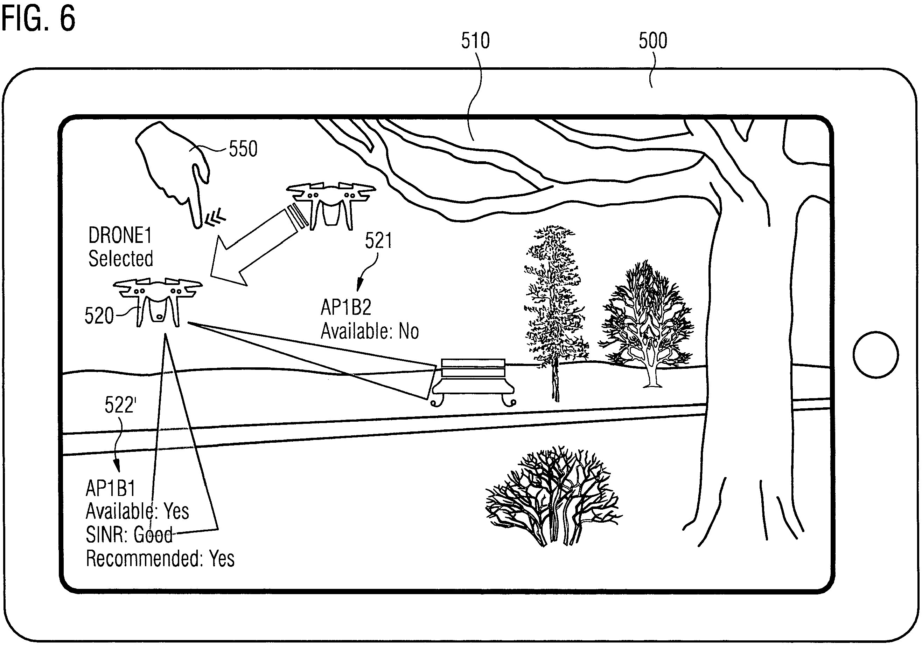

A user may want to use the service offered by the mobile access point 520 since, e.g., the user experiences currently bad channel conditions. This may be facilitated according to the proposed concept as further illustrated in Fig. 6.

For example, the user may give a user input 550 to virtually select and pull the mobile access point 520 towards him as indicated in Fig. 6. Therefore, the user may, e.g., point to a position of the mobile access point 520 on a display of the mobile terminal 500 in order to virtually select the mobile access point 520, and make a swipe movement on the display in order to virtually move the mobile access point 520 to a desired location.

As indicated in Fig. 6, by the updated information 522' on the available beam of the mobile access point 520, the real-world environment view 510 is further augmented with information about an effect of the desired user interaction on the mobile access point 520. The updated information 522' illustrates the effect of the movement of the mobile access point 520 on the QoS offered by the beam and the advice for the user whether or not to connect to this beam.

By reporting the user input 550 to the management node of the operator of the radio communication network, the user may actively communicate his desires to the operator. Accordingly, the management node or the operator may change (alter) the positioning of the mobile access point 520 in the real world as indicated by the user.

In other words, Figs. 5 and 6 may illustrate haptic feedback for moving/mobile access points. As indicated in Figs. 5 and 6, a user experiencing bad channel conditions, after visualizing a drone, may select it and pull it towards himself/herself using his/her display. This triggers a feedback from the user to, e.g., its anchor base station, which may then decide to inform the drone to move towards the position selected by the user in order to improve the quality of service for that user.

As previously mentioned, users cannot directly control either the connection to access points or the beam patterns. However, their actions of virtual control via haptic feedback through the display are used for information transfer (and feedback) to the management node, and thus to the operator, e.g. a wireless network provider, of such node. By such means, users may interactively communicate with the wireless service providers by reporting their preference and help complete as well as improve the data about the pool of wireless networks of one's own interest. Another consequence of obtaining such a feedback may be that the degree of estimation accuracy of the performance indicators of interest (per user) may be far superior to the methods in use today. Based on this haptic feedback, wireless service providers may further optimize the user association, beamforming design, and other possible mechanisms relevant to network planning/configuration/operation, taking the users' requirements into account, in order to achieve "real interactive customized service-centric networks".

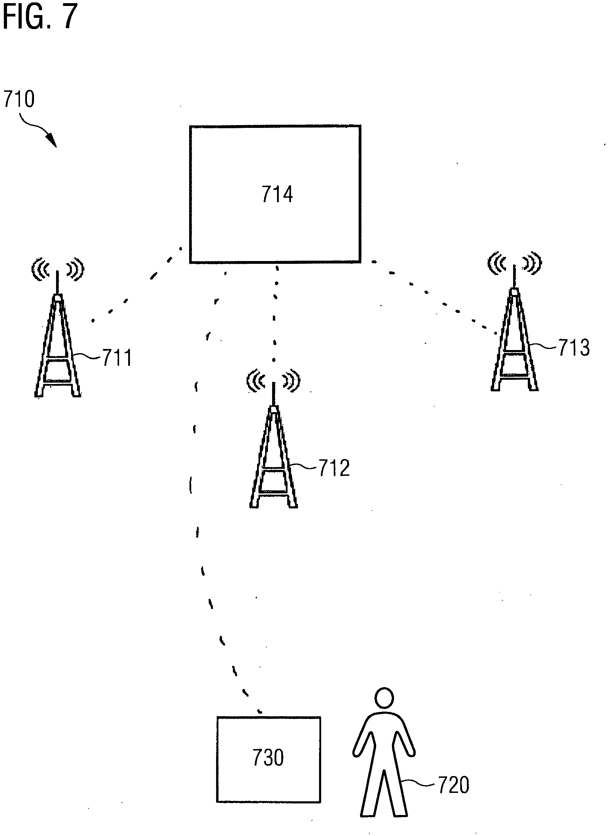

**Fig. 7** further illustrates an overview of a radio communication network 710 receiving feedback from a user 720. The radio communication network comprises a plurality of access points which are indicted by first access point 711, second access point 712 and third access point 713 in Fig. 7. Moreover, the radio communication network 710 comprises a management node 714 which manages at least in part the radio communication network 710. For example, the management node 714 may be a back-end of the radio communication network 710. If the radio communication network 710 is a cellular network, the management node 714 may, e.g., be a computer cloud hosting a Virtual Radio Access Network (VRAN). The management node 714 may directly or indirectly (e.g. via other network nodes, which are not illustrated in Fig. 7 for the sake of clarity) manage (i.e. control) the plurality of access points 711, 712, 713.

The user 720 launches an application for performing the above method on his/her mobile terminal 730. If the user moves the mobile terminal 730 towards one or more of the first access point 711, the second access point 712 and the third access point 713, the real-world environment view is augmented with information about the one or more access point 711, 712, 713. For example, information about the second access point 712 may indicate superior QoS by the second access point 712 at the location of the user 720. If the user 720 now wants to connect the mobile terminal 730 to the second access point 712, the user may select the second access point 712 in the augmented real-world environment view (e.g. by touching a part of the display of the mobile terminal 730 which illustrates the second access point 712).

In response to the user input, information about the desired connection of the mobile terminal 730 to the second access point 712 is sent by the mobile terminal 730 to the management node 714. For example, the information may be sent from the mobile terminal 730 to the management node 714 via an access point (not illustrated) of the radio communication network 710 to which the mobile terminal 730 is currently connected to, or via any other communication connection of the mobile terminal 730 (e.g. using a different communication technology). The management node 714 may now evaluate the users desire and, e.g., control the second access point 712 (directly or indirectly) to establish a connection with the mobile terminal 730. Alternatively, the management node 714 may, e.g., decide to reject the user's desire, or forward the user's desire to another network node (not illustrated) for further processing.

On the one hand, the user 720 may express his/her requirements. On the other hand, the operator of the radio communication network 710 may customize the network services according to the user's requests (desires). Accordingly, a user-centric network may be provided.

A person of skill in the art would readily recognize that steps of various above described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods.

The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figs. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method (100) for a radio communication network, comprising:
displaying (102), to a user, a real-world environment view which is augmented with information about at least one access point of the radio communication network located in the real-world;
receiving (104) a user input which indicates a desired interaction between the user and the access point; and
transmitting (106) information about the desired interaction to a management node of the radio communication network.

2. The method of claim 1, wherein the information about the access point of the radio communication network comprises information about a status of the access point.

3. The method of claim 1 or claim 2, wherein the information about the access point of the radio communication network comprises information about a beam pattern of the access point.

4. The method of claim 3, wherein the user input indicates a desired modification of the beam pattern.

5. The method of any of claims 1 to 4, wherein the information about the access point of the radio communication network comprises information about a quality of service of the access point at the user's position or in the vicinity thereof.

6. The method of any of the preceding claims, wherein the real-world environment view is augmented with information about a plurality of access points, and wherein the user input indicates a selection of one of the plurality of access points as a desired access point for connection.

7. The method of any of the preceding claims, wherein the access point is a movable access point, and wherein the user input indicates a desired movement of the access point.

8. The method of any of the preceding claims, wherein the real-world environment view is further augmented with information about an effect of the desired interaction on the access point.

9. The method of any of the preceding claims, wherein the user input is a haptic input on a touchscreen.

10. The method of any of the preceding claims, wherein the method further comprises modifying an operation of the access point based on the information about the desired interaction.

11. The method of any of the preceding claims, wherein the method further comprises displaying, to the user, a message which contains information about an action undertaken in the radio communication network based on the information about the desired interaction.

12. The method of any of the preceding claims, wherein the method further comprises transmitting, to a mobile terminal of the user, a message which comprises an invitation to launch an application for performing the method of any of claims 1 to 11 in exchange for information about an access point of the radio communication network with an improved quality of service compared to an access point currently used by the mobile terminal.

13. A computer program having a program code for performing the method of any of claims 1 to 12, when the computer program is executed on a computer or processor.

14. An apparatus (200) for a radio communication network, comprising:
a display (210) configured to display, to a user (211), a real-world environment view which is augmented with information about at least one access point of the radio communication network located in the real-world;
an input device (220) configured to receive a user input (221) which indicates a desired interaction between the user (211) and the access point; and
a transmitter (230) configured to transmit information about the desired interaction to a management node (240) of the radio communication network.

15. The apparatus of claim 14, wherein the display (210) and the input device (220) form a touchscreen.

## Amended claims

### Amended claims in accordance with Rule 137(2) EPC.

1. A method (100) for a radio communication network, comprising:
displaying (102), to a user, a real-world environment view which is augmented with information about at least one access point of the radio communication network located in the real-world, wherein the information about the access point of the radio communication network comprises information about a beam pattern of the access point;
receiving (104) a user input which indicates a desired interaction between the user and the access point; and
transmitting (106) information about the desired interaction to a management node of the radio communication network.

2. The method of claim 1, wherein the information about the access point of the radio communication network comprises information about a status of the access point.

3. The method of claim 1 or claim 2, wherein the user input indicates a desired modification of the beam pattern.

4. The method of any of claims 1 to 3, wherein the information about the access point of the radio communication network comprises information about a quality of service of the access point at the user's position.

5. The method of any of the preceding claims, wherein the real-world environment view is augmented with information about a plurality of access points, and wherein the user input indicates a selection of one of the plurality of access points as a desired access point for connection.

6. The method of any of the preceding claims, wherein the access point is a movable access point, and wherein the user input indicates a desired movement of the access point.

7. The method of any of the preceding claims, wherein the real-world environment view is further augmented with information about an effect of the desired interaction on the access point.

8. The method of any of the preceding claims, wherein the user input is a haptic input on a touchscreen.

9. The method of any of the preceding claims, wherein the method further comprises modifying an operation of the access point based on the information about the desired interaction.

10. The method of any of the preceding claims, wherein the method further comprises displaying, to the user, a message which contains information about an action undertaken in the radio communication network based on the information about the desired interaction.

11. The method of any of the preceding claims, wherein the method further comprises transmitting, to a mobile terminal of the user, a message which comprises an invitation to launch an application for performing the method of any of claims 1 to 10 in exchange for information about an access point of the radio communication network with an improved quality of service compared to an access point currently used by the mobile terminal.

12. A computer program having a program code for performing the method of any of claims 1 to 11, when the computer program is executed on a computer or processor.

13. An apparatus (200) for a radio communication network, comprising:
a display (210) configured to display, to a user (211), a real-world environment view which is augmented with information about at least one access point of the radio communication network located in the real-world, wherein the information about the access point of the radio communication network comprises information about a beam pattern of the access point;
an input device (220) configured to receive a user input (221) which indicates a desired interaction between the user (211) and the access point; and
a transmitter (230) configured to transmit information about the desired interaction to a management node (240) of the radio communication network.

14. The apparatus of claim 13, wherein the display (210) and the input device (220) form a touchscreen.
